Europäisches Patentamt

European Patent Office

Office européen des brevets

(19)

(11) Publication number: **0 065 824**
**B1**

(12) **EUROPEAN PATENT SPECIFICATION**

(45) Date of publication of patent specification: **04.06.86**

(51) Int. Cl.⁴: **B 60 K 41/06**

(21) Application number: **82302142.3**

(22) Date of filing: **27.04.82**

(54) Control system for an automatic transmission.

(30) Priority: **15.05.81 GB 8114994**

(43) Date of publication of application:
**01.12.82 Bulletin 82/48**

(45) Publication of the grant of the patent:
**04.06.86 Bulletin 86/23**

(84) Designated Contracting States:
**DE FR IT**

(56) References cited:
**DE-C- 935 047**
**GB-A-1 519 982**
**GB-A-1 531 434**
**GB-A-2 070 704**
**US-A-2 723 567**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Webster, Henry George**
**The Old School House Barrowfield Lane**
**Kenilworth Warwickshire (GB)**
Inventor: **Bainbridge, Wilfred Nicholas**
**"Staddle Stones" Overthorpe**
**Banbury Oxfordshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

The invention relates to electrical control systems for automatic transmissions of the kind in which a plurality of gear trains provides a series of gear ratios between an input and an output, the gear trains each being engageable by a respective selector mechanism, a first clutch completing the drive from the input to the output for one set of gear trains which provide alternate gear ratios in the series and a second clutch completing the drive from the input to the output for the other set of gear trains in the series.

A problem with automatic transmissions of the kind described above is that the time that each selector mechanism takes to engage or disengage its respective gear train affects the subjective quality of the gearchange. In the case of a change from a high gear ratio to the adjacent lower gear ratio this time may appear to the driver as a hesitation if the accelerator pedal is depressed rapidly for a kickdown gearchange.

It is therefore an object of the invention to provide an electrical control system for an automatic transmission of the kind described in which the hesitation during a kickdown gearchange is reduced.

According to the invention there is provided an electrical control system for an automatic transmission of the kind described, the control system including a respective driving circuit and selector control device for each selector mechanism and auxiliary means for operating the selector control device associated with the gear train which provides the adjacent lower gear ratio when one gear ratio is selected and conditions prevail which anticipate a downchange from said one gear ratio to said adjacent lower gear ratio.

The auxiliary means may comprise an interconnection between the driving circuit of the selector control device associated with the gear train providing said one gear ratio and the selector control device associated with the gear train providing said adjacent lower gear ratio and a blocking circuit in said interconnection to block the interconnection except under said conditions which anticipate a downchange. The blocking circuit may be connected to a road speed signal generator, said conditions which anticipate a downchange being constituted by the road speed being lower than a reference speed substantially equal to the maximum permitted speed in said adjacent lower gear ratio.

Preferably the blocking circuit includes a comparator and a reference signal generator, the comparator having inputs connected to the road speed signal generator and the reference signal generator and an output connected to the selector control device of said adjacent lower gear ratio to engage said lower gear ratio when said one gear ratio is engaged and the road speed signal is below the reference signal.

The invention will now be described with reference to the accompanying drawings, in which:—

Fig. 1 is a diagrammatic section of a transmission of the kind described;

Fig. 2 is a block diagram of an electrical control system according to the invention; and

Fig. 3 shows part of the control system of Fig. 2 in more detail.

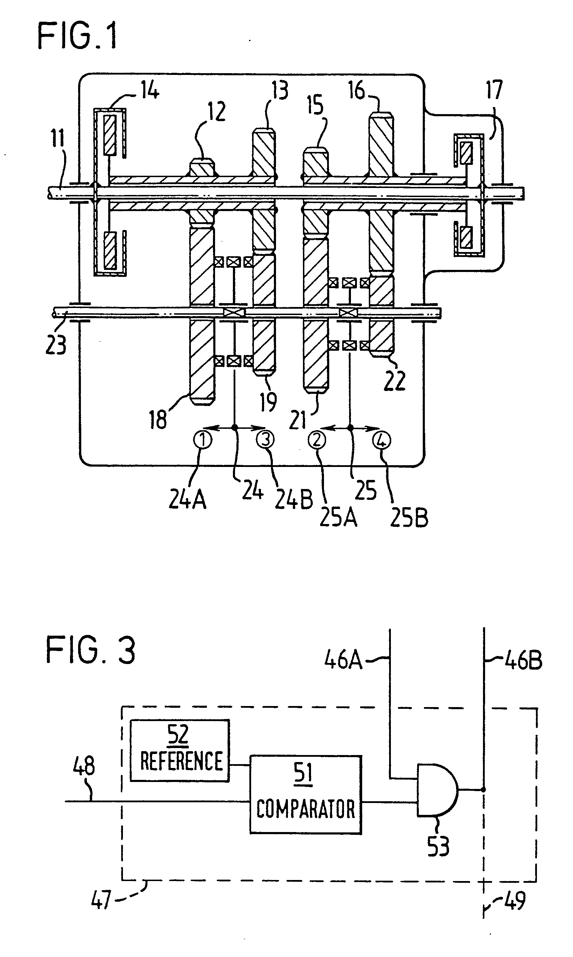

In Fig. 1 the transmission comprises an input shaft 11, such as the crankshaft of an engine, which drives 1st and 3rd gear ratio driving gears 12 and 13 through a first clutch 14 and 2nd and 4th gear ratio driving gears 15 and 16 through a second clutch 17. 1st, 3rd, 2nd and 4th gear ratio driven gears 18, 19, 21 and 22 respectively are free to turn relative to an output shaft 23 except when coupled to the output shaft 23 by a 1st/3rd synchromesh 24 or a 2nd/4th synchromesh 25. When moved in one direction, synchromesh 24 acts as a selector mechanism 24A for the 1st gear train 12, 18 and, when moved in the other direction, acts as a selector mechanism 24B for the 3rd gear train 13, 19. Similarly, when moved in one direction, synchromesh 25 acts as a selector mechanism 25A for the 2nd gear train 15, 21 and, when moved in the other direction, acts as a selector mechanism 25B for the 4th gear train 16, 22. Such a transmission is described in GB—A— 2 064 028 (published 10.6.1981).

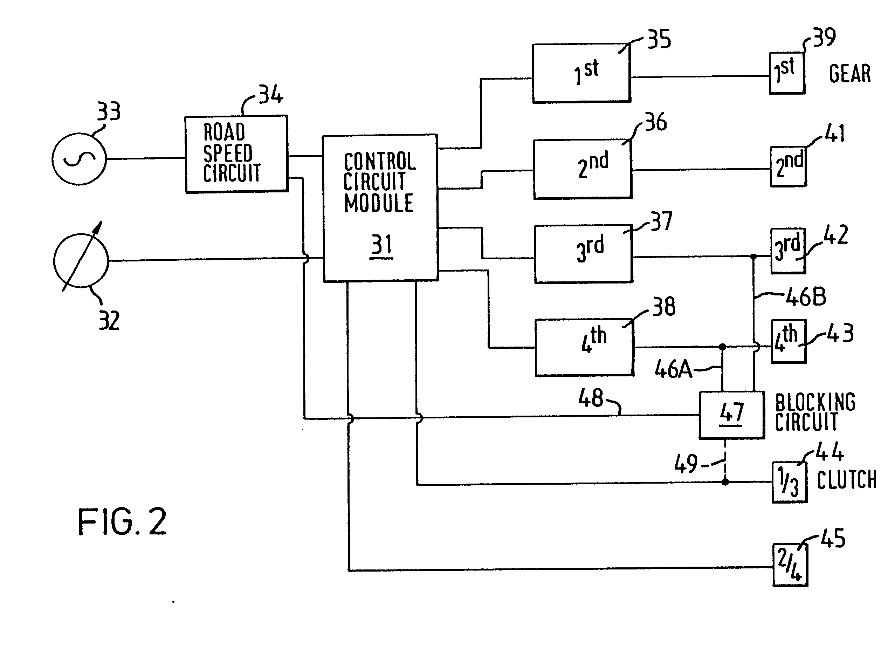

Fig. 2 shows an electrical control circuit module 31 which receives signals indicative of accelerator pedal position from a travel transducer 32 and road speed from an inductive transducer 33 which feeds a road speed signal generator 34.

The control circuit module 31 operates to command a particular gear ratio in the automatic transmission shown in Fig. 1 through respective driving circuits 35, 36, 37 and 38. Each driving circuit 35, 36, 37 or 38 controls a respective selector control device for the selector mechanism 24A, 25A, 24B or 25B, of the 1st, 2nd, 3rd or 4th speed forward gear ratio of the transmission, each selector control device including a respective solenoid valve 39, 41, 42 or 43.

The control circuit module 31 also controls a solenoid valve 44 for the operation of the first clutch 14 and a solenoid valve 45 for operation of the second clutch 17. GB—A—2 070 704 (published 9.9.1981) describes the operation of the control circuit 31 and driving circuits 35, 36, 37 and 38 in more detail.

When the 4th gear ratio is engaged and conditions prevail which anticipate a downchange to the adjacent lower gear ratio (i.e. 3rd), the invention provides auxiliary means for operating the selector control device of said adjacent lower gear ratio. In the example shown, the auxiliary means comprise a connection 46B, 46A between the 3rd gear ratio driving circuit 37 and the 4th gear ratio solenoid 43. This connection retains the 3rd gear train (gears 13 and 19) in engagement when the 4th gear train (gears 16 and 22) is engaged and driving through the second clutch 17 and is switched by a blocking circuit 47 which blocks the connection 46A, 46B when the road speed is above a value which approximates to the maximum speed in 3rd gear, i.e. the maximum speed at which the control circuit module 31 will allow a kickdown change from 4th to 3rd. By kickdown change we mean a downchange induced by sudden depression of the accelerator pedal. The blocking circuit 47 has a connection 48 with the road speed signal generator 34.

Thus in this example the conditions which anticipate a gear change from 4th to 3rd are that the road speed is in the range in which a kickdown is possible. Other conditions might include the actual speed of depression of the accelerator pedal or deceleration of the vehicle.

When the conditions do not prevail it saves wear of the gear components to disconnect the 3rd gear train. Whilst the 3rd gear train is connected but not driving, it is of course necessary to disengage the first clutch 14, which may be achieved by connection 49 from the blocking circuit 47 to the first clutch solenoid valve 44.

In Fig. 3 the blocking circuit 47 is shown in more detail. The connection 48 to the road speed signal generator 34 forms one input of a comparator 51 which compares the road speed signal with a reference signal from a reference signal generator 52. When the road speed signal is below the reference signal (corresponding to the maximum permitted speed in 3rd gear) the comparator 51 provides an output signal to an input of an AND gate 53 whose other input is to connection 46A from the 4th gear driving circuit 38. When 4th gear is engaged and the road speed is below the maximum permitted speed in 3rd gear, the AND gate 53 provides a signal to connection 46B to operate the 3rd gear ratio solenoid valve 42 and thus engage the 3rd gear train (gears 13 and 19).

## Claims

1. An electrical control system for an automatic transmission of the kind in which a plurality of gear trains (12, 18; 13, 19; 15, 21; 16, 22) provides a series of gear ratios between an input (11) and an output (23), the gear trains (12, 18; 13, 19; 15, 21; 16, 22) each being engageable by a respective selector mechanism (24A, 24B, 25A, 25B), a first clutch (14) completing the drive from the input (11) to the output (23) for one set of gear trains (12, 18; 13, 19) which provide alternate gear ratios in the series and a second clutch (17) completing the drive from the input (11) to the output (23) for the other set of gear trains (15, 21; 16, 22) in the series, the control system including a respective driving circuit (35, 36, 37, 38) and selector control device (39, 41, 42, 43) for each selector mechanism (24A, 25A, 24B, 25B) and being characterised in that auxiliary means (46A, 46B, 47) are provided for operating the selector control device (42) associated with the gear train (13, 19) which provides the adjacent lower gear ratio when one gear ratio is selected and conditions prevail which anticipate a downchange from said one gear ratio to said adjacent lower gear ratio.

2. A control system according to Claim 1, characterised in that the auxiliary means comprises an interconnection (46A, 46B) between the driving circuit (38) of the selector control device (43) associated with the gear train (16, 22) providing said one gear ratio and the selector control device (42) associated with the gear train (13, 19) providing said adjacent lower gear ratio and a blocking circuit (47) in said interconnection to block the interconnection except under said conditions which anticipate a downchange.

3. A control system according to Claim 2, characterised in that the blocking circuit (47) is connected to a road speed signal generator (34), said conditions which anticipate a downchange being constituted by the road speed being lower than a reference speed substantially equal to the maximum permitted speed in said adjacent lower gear ratio.

4. A control system according to Claim 3, characterised in that the blocking circuit (47) includes a comparator (51) and a reference signal generator (52), the comparator (51) having inputs connected to the road speed signal generator (34) and the reference signal generator (52) and an output connected to the selector control device (42) of said adjacent lower gear ratio to engage said lower gear ratio when said one gear ratio is engaged and the road speed signal is below the reference signal.

## Patentansprüche

1. Elektrisches Steuersystem für ein automatisches Getriebe, bei dem eine Vielzahl von Zahnradpaaren (12, 18; 13, 19; 15, 21; 16, 22) eine Folge von Gängen zwischen einem Eingang (11) und einem Ausgang (23) liefert, wobei jedes der Zahnradpaare (12, 18; 13, 19; 15, 21; 16, 22) durch eine jeweilige Wähleinrichtung (24A, 24B, 25A, 25B) in Eingriff bringbar ist, wobei eine erste Kupplung (14) den Antrieb vom Eingang (11) zum Ausgang (23) für eine Gruppe von Zahnradpaaren (12, 18; 13, 19) vervollständigt, welche wechselseitige Gänge in der Folge liefern, und wobei eine zweite Kupplung (17) vom Eingang (11) zum Ausgang (23) für die andere Gruppe von Zahnradpaaren (15, 21; 16, 22) in der Folge vervollständigt, wobei das Steuersystem eine jeweilige Treiberschaltung (35, 36, 37, 38) und eine Wählersteuervorrichtung (39, 41, 42, 43) für jede Wähleinrichtung (24A, 25A, 24B, 25B) aufweist und dadurch gekennzeichnet ist, daß eine Zusatzeinrichtung (46A, 46B, 47) zum Betätigen der Wählersteuervorrichtung (42) vorgesehen ist, die dem Zahnradpaar (13, 19) zugeordnet ist, das den benachbarten kleineren Gang liefert, wenn ein Gang gewählt ist und Bedingungen herrschen, die einem Herunterschalten von dem einen Gang zu dem benachbarten kleineren Gang zuvorkommen.

2. Steuersystem nach Anspruch 1, dadurch gekennzeichnet, daß die Zusatzeinrichtung eine Zwischenverbindung (46A, 46B) zwischen der Treiberschaltung (38) der Wählersteuervorrichtung (43), die dem Zahnradpaar (16, 22) zugeordnet ist, das den einen Gang liefert, und der Wählersteuervorrichtung (42), die dem Zahnradpaar (13, 19) zugeordnet ist, das den benachbarten kleineren Gang liefert, und eine Sperrschaltung (47) in der Zwischenverbindung zum Sperren der Zwischenverbindung außer unter den Bedingungen, die einem Herunterschalten zuvorkommen, aufweist.

3. Steuersystem nach Anspruch 2, dadurch gekennzeichnet, daß die Sperrschaltung (47) mit einem Fahrgeschwindigkeitssignalerzeuger (34) verbunden ist, wobei die Bedingungen, die einem Herunterschalten zuvorkommen, durch eine niedrigere Fahrgeschwindigkeit als eine Bezugsgeschwindigkeit, die im wesentlichen gleich der in dem benachbarten kleineren Gang zulässigen Höchstgeschwindigkeit ist, dargestellt werden.

4. Steuersystem nach Anspruch 3, dadurch gekennzeichnet, daß die Sperrschaltung (47) einen Komparator (51) und einen Bezugssignalerzeuger (52) aufweist, wobei der Komparator (51) mit dem Fahrgeschwindigkeitssignalerzeuger (34) und dem Bezugssignalerzeuger (52) verbundene Eingänge und einen mit der Wählersteuervorrichtung (42) des benachbarten kleineren Ganges verbundenen Ausgang hat, um den kleineren Gang einzulegen, wenn der eine Gang eingelegt ist und das Fahrgeschwindigkeitssignal unter dem Bezugssignal ist.

**Revendications**

1. Système de commande électrique pour une transmission automatique du type dans lequel plusieurs trains d'engrenages (12, 18; 13, 19; 15, 21; 16, 22) produisent une série de rapports de démultiplication entre une entrée (11) et une sortie (23), chacun de ces trains d'engrenages (12, 18; 13, 19; 15, 21; 16, 22) pouvant être enclenché par un mécanisme de sélection respectif (24A, 24B, 25A, 25B), un premier embrayage (14) assurant l'entraînement, entre l'entrée (11) et la sortie (23), d'un ensemble de trains d'engrenages (12, 18; 13, 19) qui produisent des rapports de démultiplication alternés dans ladite série, et un second embrayage (17) assurant l'entraînement, entre l'entrée (11) et la sortie (23), de l'autre ensemble de trains d'engrenages (15, 21; 16, 22) de la série, ce système de commande comprenant un circuit de commande respectif (35, 36, 37, 38) et un dispositif de commande de sélection (39, 41, 42, 43) pour chaque mécanisme de sélection (24A, 25A, 24B, 25B) et étant caractérisé en ce qu'un dispositif auxiliaire (46A, 46B, 47) est prévu pour actionner le dispositif de commande de sélection (42) associé au train d'engrenages (13, 19) qui produit le rapport de démultiplication immédiatement inférieur lorsqu'un rapport de démultiplication est sélectionné et que les conditions préalables au passage dudit rapport de démultiplication audit rapport de démultiplication immédiatement inférieur sont remplies.

2. Système de commande selon la revendication 1, caractérisé en ce que le dispositif auxiliaire comprend une interconnexion (46A, 46B), entre le circuit de commande (38) du dispositif de commande de sélection (43) associé au train d'engrenages (16, 22) produisant ledit rapport de démultiplication et le dispositif de commande de sélection (42) associé au train d'engrenages (13, 19) produisant ledit rapport de démultiplication immédiatement inférieur, et un circuit de blocage (47) dans ladite interconnexion, pour bloquer l'interconnexion, excepté dans lesdites conditions préalables à un passage à un rapport inférieur.

3. Système de commande selon la revendication 2, caractérisée en ce que le circuit de blocage (47) est connecté à un générateur de signaux de vitesse de roulement (34), les dites conditions préalables à un passage à un rapport inférieur étant constituées par le fait que la vitesse de roulement est inférieure à une vitesse de référence sensiblement égale à la vitesse maximale autorisée dans ledit rapport de démultiplication immédiatement inférieur.

4. Système de commande selon la revendication 3, caractérisée en ce que le circuit de blocage (47) comprend un comparateur (51) et un générateur de signaux de référence (52), le comparateur (51) ayant des entrées connectées au générateur de signaux de vitesse de roulement (34) et au générateur de signaux de référence (52), et une sortie connectée au dispositif de commande de sélection (42) dudit rapport de démultiplication immédiatement inférieur, pour enclencher ledit rapport de démultiplication inférieur lorsque ledit rapport de démultiplication spécifique est enclenché et que le signal de vitesse de roulement est inférieur au signal de référence.

# FIG.1

# FIG. 3

FIG. 2

0 065 824